# EUROPEAN PATENT SPECIFICATION

(11) **EP 1 058 989 B1**
(45) Date of publication and mention of the grant of the patent: **08.12.2004**
(21) Application number: 99900211.6
(22) Date of filing: 05.01.1999
(51) Int. Cl.: H04L 29/06

(54) **METHOD OF CONNECTING BASE STATION TO CELLULAR SYSTEM**
VERFAHREN ZUM ANSCHLUSS EINER BASISSTATION AN EIN ZELLULARES SYSTEM
CONNEXION D'UNE STATION DE ABSE A UN SYSTEME CELLULAIRE

(30) Priority: 07.01.1998 FI 980024
(43) Date of publication of application: 13.12.2000
(73) Proprietor: Nokia Corporation, 02150 Espoo (FI)
(72) Inventor: BERGENWALL, Martin, 02140 Espoo (FI); PIRKOLA, Juha, FIN-00520 Helsinki (FI)
(74) Representative: Antila, Harri Jukka Tapani
(86) International application number: PCT/FI1999/000004
(87) International publication number: WO 1999/035800

(56) References cited:
- EP-A1- 0 426 269
- EP-A1- 0 793 170
- EP-A2- 0 578 041

## Description

### FIELD OF THE INVENTION

The invention relates to a cellular radio system comprising a base station system which comprises a base station controller and at least one base station as network elements, and in which cellular radio system the base station controller is arranged to control at least one base station.

The invention further relates to a method of connecting a base station to a cellular radio system comprising a base station system which comprises a base station controller and at least one base station as network elements, and in which method the base station controller controls at least one base station.

### BACKGROUND OF THE INVENTION

Demands made upon data transmission systems are on the increase. This concerns particularly wireless digital data transmission systems, such as cellular radio systems, which are expected to produce increasingly complex services, for example various data services. Documents EP-A-0 426 269 and EP-A-0 578 041 relate to mobile communication systems and to network with mobile hosts respectively.

A typical cellular radio system comprises a fixed base station network in which a subscriber terminal communicates with one or more base stations of the system. Furthermore, the cellular radio system comprises a base station controller which controls the base stations, and a mobile services switching centre. In connection with the cellular radio system, it has been known to connect a plurality of base stations of the cellular radio system so as to enable a plurality of base stations to be controlled by one base station controller by means of telecommunication connections by fixed connections, such as cabling or fixedly installed radio links.

It is previously known that a transmission connection between network elements is typically implemented using a 2Mbit/s connection, i.e. a PCM (Pulse Coded Modulation) link. At worst, the 2 Mbit/s PMC link used by the operator for transmission is so occupied that the increase in capacity mentioned above would require a new PCM link to be introduced. This would be both expensive and difficult.

The prior art solutions allow the number of telecommunication connections between the base stations in a network, i.e. the network configuration, to be manually changed in such a manner that the maintenance personnel visits all base stations to be changed. This is laborious, and such a prior art system does not enable the structure of the network to be flexibly changed. For example, it is thus impossible to change the transmission capacity of different base stations daily according to the base station which has the heaviest traffic. It would be most desirable that mobile telephone operators in urban and suburban areas should have such a characteristic.

Another disadvantage of the prior art system is that owing to the manual configuration of the network transmission connections, the prior art network is difficult to manage since the network cannot be managed from one point but the base stations have to be separately visited when the network configuration is to be changed.

### BRIEF DESCRIPTION OF THE INVENTION

An object of the invention is to provide a cellular radio system so as to solve the problems described above. This can be achieved by a cellular radio system of the type described in the introduction, which is characterized in that in the cellular radio system, the network elements are connected by an information network using a packet protocol and at least one network element is autoconfigurating.

Another object of the invention is also to provide a method of installing a base station in a cellular radio system so as to solve the above problems. This, again, can be achieved by a method of the type described in the introduction, which is characterized in that the network elements are interconnected by means of an information network using a packet protocol, and that at least one network element is functioning autoconfigurously, and that each network element is provided with a unique network element address, and that the network configuration information of said information network using the packet protocol is maintained at a configuration server connected to the information network, and that a new base station connected to the network first contacts the configuration server, and that the configuration server transmits the network configuration information to the base station.

The preferred embodiments of the invention are disclosed in the dependent claims.

Packet switching is a method in which a connection between users is established by transmitting data as packets which, in addition to the actual data, comprise address data and control data. Several connections can use the same transmission connection simultaneously. In recent years, research has been carried out on the use of packet switched radio systems particularly for transmitting data. It is unnecessary to allocate a data transmission connection for the whole time, only for transmitting packets. This results in considerably lower costs and a smaller capacity need both when a network is being built and used.

The invention is based on the idea that a base station system uses data transmission based on a packet protocol, such as an Internet protocol (IP), and that the base station system comprises autoconfigurating base stations. The system comprises known network elements, such as base stations, base station controllers and a mobile services switching centre, which use an Internet protocol, i.e. an IP information network, and a new network element, i.e. a configuration server. When a new base station is connected to the network, it first contacts the configuration server in order to obtain the network configuration information, i.e. the IP address information of the nearest base station controller and other relevant network elements. The geographical coordinates of the base station can be fed into the base station while it is being installed, whereupon they are transmitted to the configuration server at a stage when the base station is introduced. The configuration server can also directly estimate the location of the base station from its IP address. When the base station has the IP information network address of the nearest base station controller, it can establish O&M (Operation and Maintenance) and signaling connections to the base station controller, which thus starts controlling the base station in a known manner. The base station controller can also utilize the information on the location of the base station in order to allocate radio frequencies to the base station.

Several advantages can be achieved by the cellular radio system and method of installing a base station in a cellular radio system of the invention. The cellular radio system and method of installing a base station in a cellular radio system enable a fast and automatized installation of base stations wherever an IP information network is available. By means of an IP-based autoconfigurating base station, the mobile communication network can be temporarily extended without an actual network extension. This is extremely useful for instance in connection with big concerts, sport events, conferences and other events in which people are congregated in a small area for a relatively short time. An existing IP-based network structure can also be utilized when a new information network is being built. Hence, it can be utilized for cellular network elements.

Furthermore, an advantage of the invention is that a base station becomes quicker and easier to install since the number of procedures that the base station installer must perform can be reduced and automatized. In addition, the base station installer does not have to know the structure of the entire base station network. The system and method of the invention reduce errors and erroneous functions in the base station network.

### BRIEF DESCRIPTION OF THE DRAWINGS

The invention is now described in closer detail in connection with the preferred embodiments of the invention with reference to the accompanying drawings in which
Figure 1 shows an IP-based cellular radio system with autoconfigurating base stations,
Figures 2a and 2b show by way of example unitdata packets of both speech and data packets, and
Figure 3 shows an IP-based base station system also comprising a network connection to other information networks.

### DETAILED DESCRIPTION OF THE INVENTION

The invention will be described below by way of example by means of a GSM network without restricting thereto, however.

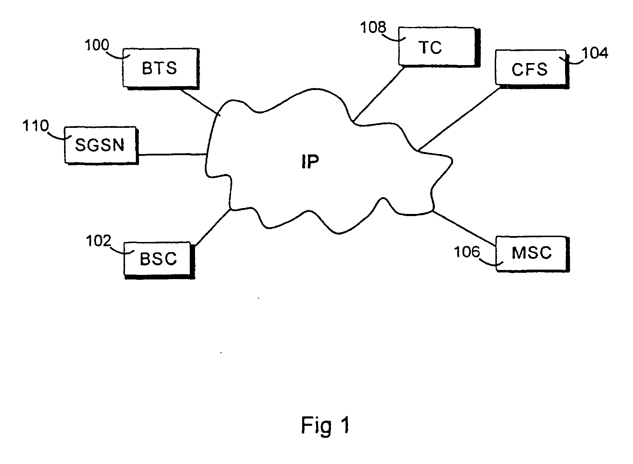

Figure 1 shows an IP-based cellular radio system which comprises a base station system (BSS, Base Station Subsystem). As network elements, the base station system comprises a base station controller (BSC) 102 and at least one base station (BTS, Base Transceiver Station) 100. In the cellular radio system, the base station controller 102 is arranged to control at least one base station 100. Most preferably, the information network using a packet protocol is an Internet protocol, i.e. an IP information network, and the network element address is an IP information network address, i.e. an IP number.

The invention is based on the idea that a cellular radio system uses data transmission based on a packet protocol, such as an Internet protocol (IP). In the most preferred embodiment, at least the network elements 100 and 102 of the cellular radio system are connected by an information network using the packet protocol. The operation of the network elements is based on network configuration information and IP address information, in other words each network element has a unique network element address which is attached to packets to be transmitted and on the basis of which the information is transmitted to the correct network element. For example, the base station 100 needs the IP address information of the nearest base station controller 102 and other relevant network elements in order to be able to communicate with the network elements and both receive and transmit calls. Known network elements of the cellular radio system include the base station 100, the base station controller 102, a mobile services switching centre 106, a speech encoding unit (TC, Transcoder) 108, i.e. a transcoder unit, i.e. a TRAU (Transcoder/Rate Adaptor Unit) unit, and, as a new element in accordance with the invention, a configuration server (CFS) 104. These network elements utilize an Internet protocol, i.e. an IP information network 116.

The mobile services switching centre 106 is equipment which belongs to the mobile communication network and which relays teleconnections in the mobile communication network and, subsequently, to other telephone networks. The mobile services switching centre 106 usually serves to, for example, monitor and control the operation of the base station systems, observe the locations of the mobile stations in the mobile services switching centre area, maintain the connections and transmit them to other information networks, and route the calls. The mobile services switching centre 106 communicates with the base station controller 102, which, again, communicates with the base station. The physical connection of the cellular radio system can vary, in other words information can physically travel via different routes in the network, depending on which route happens to be free at a given moment, but the logical connection is always the IP network, i.e. the Internet protocol network 116. Hence, information always travels logically to the same address, independently of the route via which the information has arrived. The speech encoding unit 108 operates as a coding converter, in other words it encodes and decodes speech.

The base stations 100 of the cellular radio system network elements are autoconfigurating, in other words the functions are carried out automatically by which the system, i.e. the hardware configuration, is extended or downgraded, and different parts are changed and their allocation is identified. Parameters of each base station 100 to be manually set comprise the IP addresses. Such addresses include the unique IP address of the base station 100, the address being dependent on the location of the base station 100, and the geographical coordinates of the base station 100. The geographical coordinates of the base station 100 are transmitted to the base station controller 102 when the base station is being installed. The base station 100 also transmits its geographical coordinates to the configuration server 104 when the base station is put to use or the configuration server 104 determines the location of the base station 100 from the unique IP address of the base station. In the IP networks, a plurality of networks are interconnected. A default gateway is a connection from one network to another, in other words if information is to be transmitted to an element which is not in the same network, the information must first be transmitted to the default gateway which knows how to forward it on the basis of the IP address. The IP address of the configuration server 104 and the IP address of the default gateway are also manually set parameters.

In the cellular radio system of the invention, the unique geographical location of the base station 100 is most preferably determined by means of a satellite location determination system. One such satellite location determination system is a GPS (Global Positioning System) by means of which the geographical coordinates of the base station 100 can be obtained.

The cellular radio system thus comprises the configuration server 104 which is connected to the network elements by the information network using the packet protocol. When the base station 100 is connected to the IP information network 116, it becomes connected to the configuration server 104, whereby the base station 100 obtains necessary network information. Hence, it is the configuration server 104 of the network elements which is responsible for the automatic configuration of the base stations 100. The network information obtained by the base station 100 from the configuration server 104 includes the IP addresses of the mobile services switching centre 106, the base station controller 102 and the speech encoding unit 108.

If the system includes a radio service using a packet transmission, the cellular radio system then also includes a network element (SGSN, Serving GPRS Support Node ) 110 of the radio system using the packet transmission. The configuration server 104 also transmits the IP address of this network element to the base station 100. The network element 110 of the radio system using packet transmission is responsible for mobility, signaling and routing data in the radio system.

When the base station 100 has the IP address of the nearest base station controller 102, the base station establishes O&M and signaling connections to the base station controller 102, which next starts controlling the base station 100 in a previously known manner. The signaling connection to the base station controller 102 exists as long as the base station 100 operates, while the connection between the base station 100 and the configuration server 104 is only a temporary one. The base station 100 transmits its coordinates to the base station controller 102. On the basis of the geographical location information, i.e. the coordinates, the base station controller 102 allocates a free radio channel for the base station 100, in other words allocates radio frequencies to the base station 100. The base station 100 thus contacts the base station controller 102 from which it receives software, radio parameters and network parameters.

Since the Internet protocol does not guarantee the quality of service (QoS), i.e. the combined effect of the parts of a service, which determines user satisfaction, the network has to be provided with a sufficient band width. The base station controller 102 monitors the traffic directed towards the base station 100, and if, in the operation of the base station 100 and on the connections between the network elements 100 and 102, delays occur which are longer than desired, in other words if a packet takes longer than a determined limit allows, for instance in view of call establishment or radio channel usage and various maintenance functions, the base station controller 102 refuses to establish more connections to the base station 100.

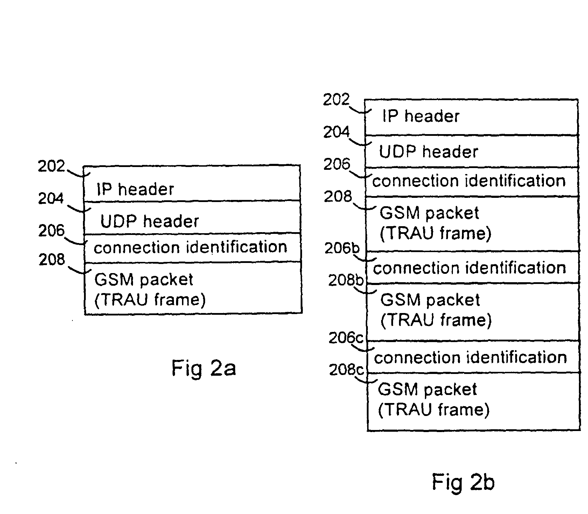

Figures 2a and 2b show by way of example unitdata packets of both speech and data packets. The speech and data packets coming from calls are transmitted in a UDP/IP unitdata packet. In the most preferred embodiment, several packets which arrive almost simultaneously can be transmitted in the same UDP/IP packet. The UDP/IP packet comprises an identifier for identifying the connection.

Figure 2a shows an IP header 202, a UDP header 204, which is the identifier of a unitdata-based protocol associated with the TCP/IP protocols, a connection identifier, and a TRAU frame 208 of a GSM packet. The connection identifier 206 indicates to which call or connection the next GSM packet belongs, in other words, in the most preferred embodiment, the connection identifier 206 is a number, i.e. an identifier, which indicates to which call a speech packet belongs. Since a base station 100 is able to transmit several calls simultaneously, each call must be provided with an identifier which indicates to the other end to which call the packet belongs. To enable the packet to arrive at a correct network element in a correct manner, the packet must be provided with an address, i.e. a header. In the most preferred embodiment, the IP header includes the IP number of a receiver and the IP number of a transmitter. The UDP header, again, is the address of the UDP packet.

Figure 2b shows an IP header 202, a UDP header 204, a connection identifier 206 - 206c and several TRAU frames 208 - 208c of a GSM packet. Several TRAU frames 208 - 208c can be transmitted at once in the GSM packet. Several connection identifiers 206 - 206c, which can be either identical or different within a packet, are thus also necessary. In the most preferred embodiment, a larger amount of information can be transmitted by transmitting several frames simultaneously as the transmission capacity is greater.

Since a common IP network has no data protection, it is necessary to provide some kind of protection or enryption. On connections between a configuration server 104, network elements 100, 102, 108 and 110, and a mobile services switching centre 106 at least some kind of encryption or eavesdropping prevention is used. The connection between the base station 100 and the configuration server 104 must be data-protected. At least some kind of identification must also be used on connections between other network elements. Known encryption methods include a digital signature, the use of a key protocol and encryption, which prevents eavesdropping and enables speech packets to be encrypted.

It is thus previously known that a transmission connection between network elements is implemented using a PCM (Pulse Coded Modulation) link. Since the capacity of PCM links is difficult to increase, in the solution of the invention, an IP network 116 is used on connections between common network elements, such as the base station 100 and the mobile services switching centre 106, in which case the mobile communication network can be temporarily extended without an actual network extension by means of the IP-based autoconfigurating base station 100, and an already existing IP-based network structure can thus be utilized when a new information network is built.

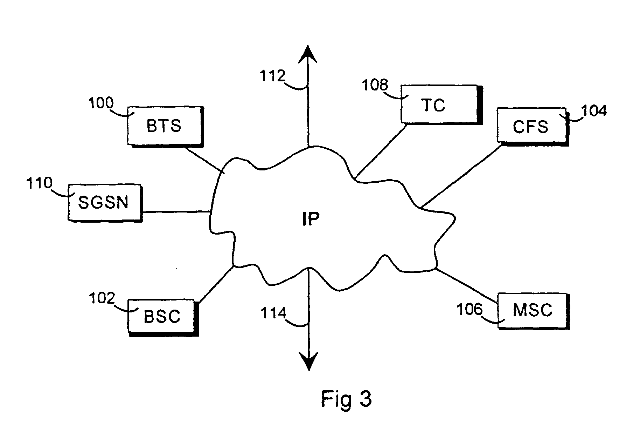

Figure 3 shows an IP-based base station system which comprises network connections 112 and 114 also to other information networks. The base station system is thus a part of a larger entity. All network elements shown in the figure operate as described in connection with Figure 1.

Although the invention is described above with reference to the example and GSM components in accordance with the accompanying drawings, it is obvious that the invention is not restricted thereto but it can be modified in various ways within the inventive idea disclosed in the attached claims, and the same leading principles can also be applied to other cellular networks, such as next generation networks (Universal Mobile Telecommunications System UMTS being planned) and IMT-2000 (International Mobile Telecommunications 2000).

## Claims

1. A cellular radio system comprising a base station system which comprises a base station controller (102) and at least one base station (100) as network elements, and in which cellular radio system the base station controller is arranged to control at least one base station,
**characterized in that** in the cellular radio system, the network elements (100, 102) are connected by an information network using a packet protocol and at least one network element is autoconfigurating.

2. A cellular radio system as claimed in claim 1, **characterized in that** the cellular radio system comprises a configuration server (104) which is connected to the network elements by the information network using the packet protocol.

3. A cellular radio system as claimed in claim 2, **characterized in that** at least one base station (100) is arranged to contact configuration server (104) and to load parametres from the configuration server into itself.

4. A cellular radio network as claimed in claim 1, **characterized in that** the cellular radio network comprises as network elements a mobile services switching centre (106), a speech encoding unit (108) and a radio system network element (110) using packet transmission, which are connected to other network elements (100, 102).

5. A cellular radio system as claimed in claim 1, **characterized in that** each network element (100, 102, 106, 108, 110) has a unique network element address which is attached to packets to be transmitted and on the basis of which information is transmitted to the correct network element.

6. A cellular radio system as claimed in claim 5, **characterized in that** the unique network element address of each base station (100), the network element address of the configuration server (104), the unique geographical coordinates of each base station, and the network element address of a default gateway are set in the base station.

7. A cellular radio system as claimed in any one of the preceding claims, **characterized in that** the information network using the packet protocol is an Internet protocol and the network element address is an IP information network address.

8. A method of connecting a base station (100) to a cellular radio system comprising a base station system which comprises a base station controller (102) and at least one base station as network elements, and in which method the base station controller controls at least one base station,
**characterized in that** the network elements (100, 102) are interconnected by means of an information network using a packet protocol, and that at least one network element is functioning autoconfigurously, and that each network element is provided with a unique network element address, and that the network configuration information of said information network using the packet protocol is maintained at a configuration server (104) connected to the information network, and that a new base station connected to the network first contacts the configuration server, and that the configuration server transmits the network configuration information to the base station.

9. A method as claimed in claim 8, **characterized in that** the configuration server (104) transmits the network element address of the nearest base station controller (102) to the base station.

10. A method as claimed in claim 8, **characterized in that** at least one base station (100) contacts configuration server (104) and loads parametres from the configuration server into itself.

11. A method as claimed in claim 8 **characterized in that** the geographical coordinates of the base station (100) are fed into the base station controller (102) at a stage when the base station is installed.

12. A method as claimed in claim 11, **characterized in that** the base station (100) transmits its geographical coordinates to the configuration server (104) at a stage when the base station is introduced.

13. A method as claimed in claim 10, **characterized in that** the configuration server (104) determines the location of the base station (100) from the unique network element address of the base station.

14. A method as claimed in claim 8 or 9, **characterized in that** the base station (100) establishes O&M and signaling connections to the base station controller (102).

15. A method as claimed in claim 11 or 12, **characterized in that** the base station controller (102) uses the geographical location information in order to allocate radio frequencies to the base station.

16. A method as claimed in claim 8, **characterized in that** a mobile services switching centre (106) serves to transmit the connections of the cellular radio system in the information network.

17. A method as claimed in claim 8, **characterized in that** on connections between the configuration server (104), the network elements (100, 102, 108, 110) and the mobile services switching centre (106), at least some kind of encryption or eavesdropping prevention is used.

18. A method as claimed in claim 8, **characterized in that** the base station controller (102) stops contacting the base station (100) if delays that are longer than desired occur on the connections between the network elements (100, 102).

19. A method as claimed in claim 8, **characterized in that** speech and data packets (208) are transmitted as unitdata packets.

20. A method as claimed in claim 19, **characterized in that** several speech and data packets which arrive at the same time can be transmitted in the same unitdata packet.

21. A method as claimed in claim 19, **characterized in that** an identifier (206) has been attached to each speech and data packet (208) in order to connect the packet to the correct connection.

22. A method as claimed in any one of claims 8 to 21, **characerized** in that an Internet protocol is used as the information network using the packet protocol, an IP information network address is used as the network element address, and a UDP/IP packet is used as the unitdata packet.

## Patentansprüche

1. Zellulares Funksystem mit einem Basisstationssystem, das eine Basisstationssteuereinrichtung (102) und zumindest eine Basisstation (100) als Netzwerkelemente umfasst, und wobei die Basisstationssteuereinrichtung in dem zellularen Funksystem zur Steuerung von zumindest einer Basisstation angeordnet ist,
**dadurch gekennzeichnet, dass**
bei dem zellularen Funksystem die Netzwerkelemente (100, 102) durch ein Informationsnetzwerk unter Verwendung eines Paketprotokolls verbunden sind, und wobei zumindest ein Netzwerkelement autokonfigurierend ist.

2. Zellulares Funksystem nach Anspruch 1, **dadurch gekennzeichnet, dass** das zellulare Funksystem einen Konfigurationsserver (104) umfasst, der mit den Netzwerkelementen durch das Informationsnetzwerk unter Verwendung des Paketprotokolls verbunden ist.

3. Zellulares Funksystem nach Anspruch 2, **dadurch gekennzeichnet, dass** zumindest eine Basisstation (100) zur Kontaktierung des Konfigurationsservers (104) und zum Laden von Parameter von dem Konfigurationsserver in sich angeordnet ist.

4. Zellulares Funksystem nach Anspruch 1, **dadurch gekennzeichnet, dass** das zellulare Funknetzwerk als Netzwerkelemente ein Mobildienstvermittlungszentrum (106), eine Sprachkodiereinheit (108) und ein Funksystemnetzwerkelement (110) unter Verwendung einer Paketübertragung umfasst, die mit anderen Netzwerkelementen (100, 102) verbunden sind.

5. Zellulares Funksystem nach Anspruch 1, **dadurch gekennzeichnet, dass** jedes Netzwerkelement (100, 102, 106, 108, 110) eine einheitliche Netzwerkelementadresse aufweist, die an zu übertragene Pakete angebracht ist, und auf deren Basis Informationen an das korrekte Netzwerkelement übertragen werden.

6. Zellulares Funksystem nach Anspruch 5, **dadurch gekennzeichnet, dass** die einheitliche Netzwerkelementadresse jeder Basisstation (100), die Netzwerkelementadresse des Konfigurationsservers (104), die einheitlichen geografischen Koordinaten jeder Basisstation sowie die Netzwerkelementadresse einer vorgegebenen Zugangseinrichtung in der Basisstation eingestellt sind.

7. Zellulares Funksystem nach einem der vorstehenden Ansprüche, **dadurch gekennzeichnet, dass** das Informationsnetzwerk unter Verwendung des Paketprotokolls ein Internetprotokoll ist, und die Netzwerkelementadresse eine IP-Informationsnetzwerkadresse ist.

8. Verfahren zur Verbindung einer Basisstation (100) mit einem zellularen Funksystem mit einem Basisstationssystem, das eine Basisstationssteuereinrichtung (102) und zumindest eine Basisstation als Netzwerkelemente umfasst, und wobei die Basisstationssteuereinrichtung zumindest eine Basisstation bei dem Verfahren steuert,
**dadurch gekennzeichnet, dass**
die Netzwerkelemente (100, 102) mittels eines Informationsnetzwerks unter Verwendung eines Paketprotokolls vernetzt sind, und dass zumindest ein Netzwerkelement autokonfigurierend arbeitet, und dass jedes Netzwerkelement mit einer einheitlichen Netzwerkelementadresse versehen ist, und dass die Netzwerkkonfigurationsinformationen des Informationsnetzwerks unter Verwendung des Paketprotokolls bei einem mit dem Informationsnetzwerk verbundenen Konfigurationsserver (104) geführt werden, und dass eine mit dem Netzwerk verbundene neue Basisstation zunächst den Konfigurationsserver kontaktiert, und dass der Konfigurationsserver die Netzwerkkonfigurationsinformationen an die Basisstation überträgt.

9. Verfahren nach Anspruch 8, **dadurch gekennzeichnet, dass** der Konfigurationsserver (104) die Netzwerkelementadresse der am nächsten befindlichen Basisstationssteuereinrichtung (102) an die Basisstation überträgt.

10. Verfahren nach Anspruch 8, **dadurch gekennzeichnet, dass** zumindest eine Basisstation (100) den Konfigurationsserver (104) kontaktiert und Parameter von dem Konfigurationsserver in sich lädt.

11. Verfahren nach Anspruch 8, **dadurch gekennzeichnet, dass** die geografischen Koordinaten der Basisstation (100) in die Basisstationssteuereinrichtung (102) während einer Stufe gespeist werden, zu der die Basisstation installiert wird.

12. Verfahren nach Anspruch 11, **dadurch gekennzeichnet, dass** die Basisstation (100) ihre geografischen Koordinaten an den Konfigurationsserver (104) während einer Stufe überträgt, zu der die Basisstation eingeführt wird.

13. Verfahren nach Anspruch 10, **dadurch gekennzeichnet, dass** der Konfigurationsserver (104) den Standort der Basisstation (100) aus der einzigartigen Netzwerkelementadresse der Basisstation bestimmt.

14. Verfahren nach Anspruch 8 oder 9, **dadurch gekennzeichnet, dass** die Basisstation (100) O&M- sowie Signalisierungsverbindungen mit der Basisstationssteuereinrichtung (102) aufbaut.

15. Verfahren nach Anspruch 11 oder 12, **dadurch gekennzeichnet, dass** die Basisstationssteuereinrichtung (102) die geografischen Standortinformationen für die Zuweisung von Funkfrequenzen an die Basisstation verwendet.

16. Verfahren nach Anspruch 8, **dadurch gekennzeichnet, dass** ein Mobildienstvermittlungszentrum (106) zur Übertragung der Verbindungen des zellularen Funksystems in dem Informationsnetzwerk dient.

17. Verfahren nach Anspruch 8, **dadurch gekennzeichnet, dass** auf Verbindungen zwischen dem Konfigurationsserver (104), den Netzwerkelementen (100, 102, 108, 110) und dem Mobildienstvermittlungszentrum (106) zumindest eine Art von Verschlüsselung oder Abhörvermeidung verwendet wird.

18. Verfahren nach Anspruch 8, **dadurch gekennzeichnet, dass** die Basisstationssteuereinrichtung (102) mit der Kontaktierung der Basisstation (100) endet, falls Verzögerungen, die länger als gewünscht sind, auf den Verbindungen zwischen den Netzwerkelementen (100, 102) auftreten.

19. Verfahren nach Anspruch 8, **dadurch gekennzeichnet, dass** Sprach- und Datenpakete (208) als Einheitdatenpakete übertragen werden.

20. Verfahren nach Anspruch 19, **dadurch gekennzeichnet, dass** mehrere Sprach- und Datenpakete, die gleichzeitig ankommen, in demselben Einheitdatenpaket übertragen werden können.

21. Verfahren nach Anspruch 19, **dadurch gekennzeichnet, dass** ein Kennzeichen (206) an jedes Sprach- und Datenpaket (208) angebracht wurde, damit das Paket mit der korrekten Verbindung verbunden werden kann.

22. Verfahren nach einem der Ansprüche 8 bis 21, **dadurch gekennzeichnet, dass** ein Internetprotokoll als Informationsnetzwerk unter Verwendung des Paketprotokolls verwendet wird, dass eine IP-Informationsnetzwerkadresse als Netzwerkelementadresse verwendet wird, und dass ein UDP/IP-Paket als Einheitdatenpaket verwendet wird.

## Revendications

1. Système radio cellulaire comprenant un système de station de base qui comprend un contrôleur de station de base (102) et au moins une station de base (100) en tant qu'éléments de réseau, et dans lequel le contrôleur de stations de base est agencé pour contrôler au moins une station de base,
**caractérisé en ce que** dans le système radio cellulaire, les éléments de réseau (100, 102) sont connectés par un réseau d'informations utilisant un protocole par paquets et **en ce qu'**au moins un élément de réseau s'autoconfigure.

2. Système radio cellulaire selon la revendication 1, **caractérisé en ce que** le système radio cellulaire comprend un serveur de configuration (104) qui est connecté aux éléments de réseau par le réseau d'informations utilisant le protocole par paquets.

3. Système radio cellulaire selon la revendication 2, **caractérisé en ce qu'**au moins une station de base (100) est agencée pour établir un contact avec le serveur de configuration (104) et pour charger en elle-même les paramètres à partir du serveur de configuration.

4. Réseau radio cellulaire selon la revendication 1, **caractérisé en ce que** le réseau radio cellulaire comprend un centre de commutation de services mobiles (106), une unité de codage vocal (108) et un élément de réseau de système radio (110) utilisant la transmission par paquets en tant qu'éléments de réseau, qui sont connectés aux autres éléments de réseau (100, 102).

5. Système radio cellulaire selon la revendication 1, **caractérisé en ce que** chaque élément de réseau (100, 102, 106, 108, 110) dispose d'une adresse d'élément de réseau unique associée aux paquets à transmettre et en se basant sur le fait que les informations sont transmises à l'élément de réseau correct.

6. Système radio cellulaire selon la revendication 5, **caractérisé en ce que** l'adresse de l'élément de réseau unique de chaque station de base (100), l'adresse de l'élément de réseau du serveur de configuration (104), les coordonnées géographiques uniques de chaque station de base, et l'adresse de l'élément de réseau d'une passerelle par défaut sont établies dans la station de base.

7. Système radio cellulaire selon l'une quelconque des revendications précédentes, **caractérisé en ce que** le réseau d'informations utilisant le protocole par paquets est un protocole Internet et **en ce que** l'adresse de l'élément de réseau est une adresse IP de réseau d'informations.

8. Procédé destiné à connecter une station de base (100) à un système radio cellulaire comprenant un système de station de base qui comprend un contrôleur de stations de base (102) et au moins une station de base en tant qu'éléments de réseau, et dans lequel le contrôleur de stations de base contrôle au moins une station de base,
**caractérisé en ce que** les éléments de réseau (100, 102) sont interconnectés au moyen d'un réseau d'informations utilisant un protocole par paquets, et **en ce qu'**au moins un élément de réseau fonctionne par autoconfiguration, et **en ce que** chaque élément de réseau est prévu avec une seule adresse d'élément de réseau et **en ce que** les informations de configuration de réseau dudit réseau d'informations utilisant le protocole par paquets sont maintenues au niveau du serveur de configuration (104) connecté au réseau d'informations, et **en ce qu'**une nouvelle station de base connectée au réseau établit d'abord un contact avec le serveur de configuration, et **en ce que** le serveur de configuration transmet les informations de configuration du réseau à la station de base.

9. Procédé selon la revendication 8 **caractérisé en ce que** le serveur de configuration (104) transmet l'adresse de l'élément de réseau du contrôleur de stations de base (102) le plus proche à la station de base.

10. Procédé selon la revendication 8, **caractérisé en ce qu'**au moins une station de base (100) établit un contact avec le serveur de configuration (104) et charge en elle-même les paramètres à partir du serveur de configuration.

11. Procédé selon la revendication 8 **caractérisé en ce que** les coordonnées géographiques de la station de base (100) sont introduites dans le contrôleur de stations de base (102) au niveau où la station de base est installée.

12. Procédé selon la revendication 11 **caractérisé en ce que** la station de base (100) transmet ses coordonnées géographiques au serveur de configuration (104) à un niveau où la station de base est introduite.

13. Procédé selon la revendication 10 **caractérisé en ce que** le serveur de configuration (104) détermine l'emplacement de la station de base (100) à partir de la seule adresse d'élément de réseau de la station de base.

14. Procédé selon la revendication 8 ou 9, **caractérisé en ce que** la station de base (100) établit l'opération et la maintenance et les connexions de signalisation au contrôleur de stations de base (102).

15. Procédé selon la revendication 11 ou 12 **caractérisé en ce que** le contrôleur de stations de base (102) utilise les informations d'emplacement géographique afin d'affecter les fréquences radio à la station de base.

16. Procédé selon la revendication 8, **caractérisé en ce qu'**un centre de commutation de services mobiles (106) sert à transmettre les connexions du système radio cellulaire dans le réseau d'informations.

17. Procédé selon la revendication 8, **caractérisé en ce que** sur les connexions entre le serveur de configuration (104), les éléments de réseau (100, 102, 108, 110) et le centre de commutation des services mobiles (106), au moins un certain type de chiffrement ou de prévention en matière d'écoute électronique est utilisé.

18. Procédé selon la revendication 8 **caractérisé en ce que** le contrôleur de stations de base (102) arrête d'établir un contact avec la station de base (100) si des délais qui sont plus longs que souhaités se produisent sur les connexions entre les éléments de réseau (100, 102).

19. Procédé selon la revendication 8, **caractérisé en ce que** les paquets de voix et de données (208) sont transmis en tant que paquets de données d'unité.

20. Procédé selon la revendication 19, **caractérisé en ce que** plusieurs paquets de voix et de données qui arrivent au même moment peuvent être transmis dans le même paquet de données d'unité.

21. Procédé selon la revendication 19, **caractérisé en ce qu'**un identifiant (206) a été associé à chaque paquet de voix et de données (208) afin de connecter le paquet à la connexion correcte.

22. Procédé selon l'une quelconque des revendications 8 à 21, **caractérisé en ce que** le protocole Internet est utilisé en tant que réseau d'informations utilisant le protocole par paquets, une adresse IP de réseau d'informations est utilisée en tant qu'adresse d'élément de réseau, et un paquet UDP/IP est utilisé en tant que paquet de données d'unité.
